Europäisches Patentamt

European Patent Office

Office européen des brevets

(11) Veröffentlichungsnummer : **0 043 552**
**B1**

# (12) EUROPÄISCHE PATENTSCHRIFT

(45) Veröffentlichungstag der Patentschrift :
23.05.84

(21) Anmeldenummer : 81105104.4

(22) Anmeldetag : 01.07.81

(51) Int. Cl.³ : **B 32 B 27/08, B 42 D 15/02**

(54) **Fälschungssicheres Ausweispapier mit thermoplastischer Abdeckfolie.**

(30) Priorität : 09.07.80 DE 3025931

(43) Veröffentlichungstag der Anmeldung :
13.01.82 Patentblatt 82/02

(45) Bekanntmachung des Hinweises auf die Patenterteilung : 23.05.84 Patentblatt 84/21

(84) Benannte Vertragsstaaten :
AT BE CH DE FR GB IT LI LU NL SE

(56) Entgegenhaltungen :
DE-A- 2 932 575
FR-A- 2 302 933
US-A- 3 595 740
US-A- 4 115 618
US-H-   480 591

(73) Patentinhaber : HOECHST AKTIENGESELLSCHAFT
Postfach 80 03 20
D-6230 Frankfurt am Main 80 (DE)

(72) Erfinder : Dallmann, Hermann, Dr.
Erbsenacker 29
D-6200 Wiesbaden (DE)
Erfinder : Palmen, Hans Josef, Dr.
Fliederstrasse 22
D-6229 Walluf (DE)

**Beschreibung**

Die vorliegende Erfindung betrifft ein ein Foto tragendes fälschungssicheres Ausweispapier, das eine das Foto abdeckende Abdeckfolie aufweist.

Ausweispapiere, wie Personalausweise, Pässe, Führerscheine u. s. w. werden u. a. dadurch gefälscht, daß das in ihnen enthaltene Foto ausgetauscht und/oder die enthaltene Information geändert wird.

Es werden deshalb große Anstrengungen unternommen, um die Ausweispapiere fälschungssicher zu machen. Aus der GB-A-888 359 ist es bekannt, Kennkarten, die auf einer Papierunterlage ein Foto tragen, mit einem Deck- und Rückenblatt aus Polyesterfolie zu versehen. Die Polyesterfolie ist mit einer Schmelzkleberbeschichtung versehen, die dann auf die Papierunterlage aufgeklebt ist. Die Haftung dieser Folie ist jedoch nicht sehr hoch, so daß die Abdeckfolie noch relativ leicht von der Unterlage abgezogen werden kann ohne diese zu beschädigen. Zur Verbesserung der Haftung wurde deshalb gemäß der US-A-34 13 171 vorgeschlagen, auf den Papierträger eine gleichartige Schmelzkleberschicht aufzutragen. Es hat sich jedoch auch hier gezeigt, daß der Schmelzkleber an der Oberfläche des Fotos schlecht haftet und die Abdeckung sich immer noch von der Unterlage löst oder von Unbefugten entfernt werden kann, ohne daß dies am Foto feststellbar wäre.

Aus der DE-B-27 36 852 sind Abdeckungen für Kennkarten bekannt, bei denen auf die Schmelzkleberschicht des Deckblattes eine Zusatzschicht zur besseren Verklebung aufgebracht ist, wobei die Beschichtung in einem Muster aufgebracht ist. Hinweise auf die Haftfestigkeit der Abdeckung insbesondere auch bei Wärmebelastung oder bei Behandlung mit Lösungsmitteln fehlen jedoch. Nachteilig bei dieser Folie ist auch die technisch relativ aufwendige Herstellung. Die Abdeckung ist offensichtlich auch nur dafür gedacht, noch feuchte Fotos zu kaschieren. Die US-A-40 93 489 beschreibt Schutzschichten für Fotografien aus hitzehärtbaren, Katalysator enthaltenden Melamin-Formaldehyd-Kondensationsprodukten. Die Schicht wird bei hohem Druck in Abhängigkeit von den jeweiligen Bedingungen zwischen 3 und 10 Minuten ausgehärtet. Das Verfahren hat den Nachteil, daß es wegen der langen Presszeiten nicht für einen kontinuierlichen Prozess, bei dem man von der Rolle arbeitet, geeignet ist.

In der US-A-41 15 618 sind Schutzfolien für Ausweise etc. beschrieben, die aus einer einseitig hydrolysierten Cellulosetriacetatschicht und einer darauf verankerten Schicht aus einer Mischung aus Polyvinylalkohol und Polyvinylacetat besteht. Nachteilig an dieser Folie ist die Tatsache, daß auf das feuchte Foto aufkaschiert werden muß.

Die Anforderungen an eine Folie, die als Abdeckung bei der Herstellung von fälschungssicheren Ausweispapieren verwendet werden soll, sind erheblich.

So darf sich die aufkaschierte Abdeckfolie weder bei Raumtemperatur noch bei Wärmebehandlung von der Unterlage ablösen lassen. Sie soll gut schweißbar sein und auch bei Behandlung z. B. mit herkömmlichen organischen Lösungsmitteln nicht delaminieren. Vor allem muß sie jedoch derart fest auf der Gelatineschicht des Fotos haften, daß sie unter den genannten Voraussetzungen nicht ablösbar ist, ohne daß das Foto zerstört wird. Die Folie muß weiterhin kratzfest, lichtecht, vergilbungsfrei und alterungsbeständig sein.

Unter der Voraussetzung, daß der Ausweis die Informationsträger als Prägung enthält, muß die Abdeckfolie auch gut, d. h. schnell und mit scharfen Konturen, prägbar sein, wobei es nicht zu Sprüngen und Rissen kommen darf.

Keine der eingangs geschilderten Beschichtungen erfüllt alle diese Forderungen gleichzeitig.

Es stellte sich somit die Aufgabe, ein Ausweispapier mit einer Folie zur Verfügung zu stellen, die alle die vorstehend genannten Forderungen gleichzeitig zufriedenstellend erfüllt.

Gelöst wird die vorstehend genannte Aufgabe durch ein Ausweispapier der eingangs genannten Art, dadurch gekennzeichnet, daß die Abdeckfolie aus einer Basisschicht und einer Deckschicht aus einem teilverseiften Olefinvinylester-Copolymeren besteht.

Es hat sich überraschenderweise gezeigt, daß die auf das Ausweispapier aufkaschierte Abdeckfolie sowohl bei Raumtemperatur als auch bei Wärmebehandlung bis über 100 °C nicht ohne Zerstörung der Unterlage, insbesondere des Fotos, abzulösen war. Die Folie war weiterhin gut und schnell siegelnd, kratzfest, licht-, alterungs- und lösungsmittelbeständig und konnte konturenscharf geprägt werden.

Die Deckschicht besteht vorzugsweise aus einem teilverseiften Ethylenvinylester-Copolymeren, wobei wiederum ein teilverseiftes Ethylenvinylacetat-Copolymeres wegen seiner leichten Zugänglichkeit bevorzugt ist.

Es haben sich vor allem solche Polymere bewährt, bei denen der Olefin-, bevorzugt der Ethylengehalt ⩾ 30 Molprozent beträgt.

Der Verseifungsgrad des Deckschichtpolymeren liegt bevorzugt im Bereich zwischen 20 und 99 %. Die Auswahl der für die Deckschicht einzusetzenden Polymeren richtet sich im wesentlichen nach den Siegelbedingungen sowie der technischen Belastbarkeit der Abdeckfolie und der Unterlage.

Neben den reinen, teilverseiften Olefinvinylester-Copolymeren kann die Deckschicht auch aus Mischungen des Copolymeren mit damit verträglichen Polymeren bestehen.

Bevorzugt tragen die einzumischenden Polymeren Carbonylgruppen. Beispielhaft seien hier Ethylenvinylacetat-Copolymere, Ethylen-Acrylsäure bzw. Acrylsäureester-Copolymere, Polyester, Polyamide und Polyurethane genannt. Ebenfalls können Harze, wie Terpenharze, zugemischt werden.

Sowohl die Basisschicht als auch die Deckschicht können übliche Zusätze, wie Antioxidationsmittel, Pigmente, Farbstoffe u. a., enthalten.

Die Auswahl und Menge der Zusatzstoffe hängt weitgehend von der gewünschten Transparenz der Endfolie, der Verträglichkeit, z. B. bei thermischer Belastung und der Nichtverschlechterung der Siegelfähigkeit der Deckschicht ab.

Als Basisschicht sind an sich alle Folien geeignet, die kratzfest und alterungsbeständig sind und die auch nach längerer Zeit nicht vergilben. Bevorzugte Basisschichten bestehen aus Folien aus Polyvinylchlorid, Polyester, Polycarbonat, Polyamid, Celluloseacetobutyrat und Celluloseacetat.

Unter diesen Folien wird den Polyestern der Vorzug gegeben, wobei wiederum Polyethylenterephthalat bevorzugt ist.

Die Folien können in nicht orientierter Form eingesetzt werden. Sie werden jedoch vorzugsweise in gestreckter und thermofixierter Form verwendet, da sie hierdurch eine höhere mechanische Belastbarkeit und keinen oder nur geringen Schrumpf bei thermischer Belastung aufweisen.

Die Gesamtstärke der Abdeckfolie kann variiert werden und richtet sich im wesentlichen nach den jeweiligen Erfordernissen.

Soll das Ausweispapier nach der Aufkaschierung der Abdeckfolie noch geprägt werden, muß die Schichtstärke ebenfalls den Prägebedingungen (Temperatur, Druck, geforderte Prägetiefe) angepaßt werden.

Folien aus leicht fließfähigen Polymeren, z. B. Polyvinylchlorid, benötigen nur geringe Preßpolster, während sich z. B. orientierte Polyesterfolien mit zunehmender Schichtstärke schwer prägen lassen.

Die Herstellung der Abdeckfolie kann auf verschiedenen Wegen erfolgen.

Man kann eine Folie aus dem teilverseiften Olefinvinylester-Copolymeren herstellen und diese auf die Basisschicht aufkaschieren, vorzugsweise unter Verwendung einer haftvermittelnden Schicht.

Es ist jedoch auch möglich, die Basisfolie vorzulegen und vorzugsweise nach Aufbringen einer haftvermittelnden Schicht mit dem Olefinvinylester-Copolymeren schmelzbeschichten.

Alternativ kann die Abdeckfolie auch durch Coextrusion der Polymeren und Vereinigung der Schichten im thermoplastischen Zustand hergestellt werden.

Werden Haftvermittler verwendet, werden bevorzugt solche Produkte eingesetzt, die nach der Vernetzung noch eine ausreichende Haftung bei thermischer Belastung der Abdeckfolie zeigen. Beispielhaft seien hier Urethan-Prepolymere, die mit Expoxiden oder ähnlichen Produkten vernetzt sind, genannt.

Die Deckschicht aus dem teilverseiften Olefinvinylester-Copolymeren kann im Bedarfsfall, z. B. zur weiteren Verbesserung der Haftung auf der Unterlage bzw. auf dem Foto, noch mit einer zusätzlichen Schicht versehen werden. Diese Schicht wird bevorzugt in einem unterbrochenen Muster aufgedruckt, wobei das Muster insbesondere derart angelegt ist, daß sich beim Versuch der Ablösung der Abdeckfolie von dem Ausweispapier keine Reißlinien ergeben können.

Als zusätzliche Schicht können gelöste Polymere auf der Basis von Polyamiden, Polyester, Polyurethanen oder Ethylenvinylacetat aufgebracht werden, wobei solche Polymere bevorzugt sind, die ohne zusätzliche Zwischenschicht auf der Deckschicht haften, eine nicht zum Blocken neigende Schicht bilden und die Transparenz der Abdeckfolie nicht wesentlich beeinflussen.

Bevorzugt wird die Abdeckfolie entweder nach der Herstellung direkt oder kurz vor der Aufkaschierung auf das Ausweispapier einer Coronabehandlung unterworfen. Es hat sich nämlich gezeigt, daß hierdurch die Haftfestigkeit zwischen Unterlage und Abdeckfolie noch weiter gesteigert werden kann.

Die Erfindung wird anhand der folgenden Beispiele nochmals näher erläutert, wobei jedoch keine Einschränkung hierauf bestehen soll.

## Beispiel 1

Es wurde durch Schmelzbeschichtung eine Abdeckfolie hergestellt mit folgendem Schichtaufbau :

| | |
|---|---|
| a) biaxial gestreckte und thermofixierte Polyethylenterephthalatschicht | 50 μm |
| b) Polyurethankleber (UK 3645/UK 6200 der Firma Henkel u. Cie) | 4 μm |
| c) Schicht aus 97 % verseiftem Ethylenvinylacetat-Copolymeren mit einem Ethylengehalt von ca. 33 Gew.-% | 120 μm |

Nach einer Coronabehandlung wurde die Abdeckfolie mit der Deckschichtseite auf herkömmliches Fotopapier bei 130 °C unter Druck aufkaschiert und bei der gleichen Temperatur unter hohem Druck geprägt.

Weder bei Raumtemperatur noch bei 120 °C ließ sich die Abdeckfolie ohne Zerstörung des Fotopapiers ablösen. Auch nach mehrtägiger Lagerung in Wasser sowie verschiedenen gebräuchlichen organischen Lösungsmitteln wie Ethylalkohol, Methanol, Benzol usw. konnte ein Ablösen der Abdeckfolie von der Unterlage nur unter Zerstörung herbeigeführt werden.

## Beispiel 2

Es wurde durch Schmelzbeschichtung eine Abdeckfolie hergestellt mit folgendem Schichtaufbau :

3

a) biaxial gestreckte und thermofixierte Polyethylenterephthalatfolie     50 μm
b) Polyurethankleber des Beispiels 1     4 μm
c) Schicht aus einer Mischung aus 90 Gewichtsprozent des Copolymeren des Beispiels 1 und 10 Gewichtsprozent eines carbonylgruppenhaltigen Ethylencopolymeren (Lupolen® A 2910 M der Firma BASF AG)     100 μm

Die Abdeckfolie wurde coronabehandelt und den Tests nach Beispiel 1 unterzogen. Auch hier wurden die gleichen Ergebnisse, wie in Beispiel 1 angegeben, erzielt.

### Beispiel 3

Auf die in Beispiel 1 angegebene Abdeckfolie wurde auf die Deckschicht partiell eine siegelfähige Schicht auf Polyamidbasis in Form eines Musters aufgedruckt und die bedruckte Schicht einer Coronabehandlung unterzogen. Die Tests und die Ergebnisse entsprachen denen von Beispiel 1.

### Beispiel 4

Durch Coextrusion wurde eine Abdeckfolie aus Polyamid 6 (50 μm) und dem Copolymeren des Beispiels 1 (150 μm) hergestellt.
Nach der Coronabehandlung wurden die gleichen Tests wie in Beispiel 1 durchgeführt.
Es wurden die gleichen Ergebnisse, wie in Beispiel 1 angegeben, erzielt.

### Beispiel 5

Es wurde analog Beispiel 1 gearbeitet, nur daß die Deckschicht aus einer Mischung aus 60 Gew.-% aus dem teilverseiften Ethylenvinylacetat-Copolymeren des Beispiels 1 und 40 Gew.-% eines Copolyamids (Durethan® C38F der Fa. BAYER AG) bestand.
Es wurden die gleichen Testergebnisse, wie bei Beispiel 1 angegeben, erzielt.

## Ansprüche

1. Ein Foto tragendes fälschungssicheres Ausweispapier, das eine das Foto abdeckende Abdeckfolie aufweist, dadurch gekennzeichnet, daß die Abdeckfolie aus einer Basisschicht und einer Deckschicht aus einem teilverseiften Olefinvinylester-Copolymeren besteht.

2. Ausweispapier nach Anspruch 1, dadurch gekennzeichnet, daß die Deckschicht aus einem teilverseiften Ethylenvinylester-Copolymeren besteht.

3. Ausweispapier nach Anspruch 2, dadurch gekennzeichnet, daß die Deckschicht aus einem teilverseiften Ethylenvinylacetat-Copolymeren besteht.

4. Ausweispapier nach einem der Ansprüche 1 bis 3, dadurch gekennzeichnet, daß die Deckschicht aus einem teilverseiften Ethylenvinylester-Copolymeren besteht, dessen Olefingehalt $\geq 30$ Molprozent beträgt.

5. Ausweispapier nach einem der Ansprüche 1 bis 4, dadurch gekennzeichnet, daß der Verseifungsgrad der Deckschicht zwischen 20 und 99 % beträgt.

6. Ausweispapier nach einem der Ansprüche 1 bis 5, dadurch gekennzeichnet, daß die Deckschicht aus einer Mischung aus dem teilverseiften Polymeren mit damit verträglichen Polymeren besteht.

7. Ausweispapier nach Anspruch 6, dadurch gekennzeichnet, daß die eingemischten Polymere carbonylgruppenhaltige Kunststoffe sind.

8. Ausweispapier nach einem der Ansprüche 1 bis 7, dadurch gekennzeichnet, daß die Deckschicht eine weitere Schicht in Form eines unterbrochenen Musters trägt.

9. Ausweispapier nach einem der Ansprüche 1 bis 8, dadurch gekennzeichnet, daß die Basisschicht aus Polyvinylchlorid, Polyester, Polycarbonat, Polyamid, Celluloseacetobutyrat oder Celluloseacetat, gegebenenfalls in orientierter und thermofixierter Form, besteht.

10. Ausweispapier nach Anspruch 9, dadurch gekennzeichnet, daß bei Verwendung von Polyester die Basisschicht aus Polyethylenterephthalat besteht.

11. Ausweispapier nach Anspruch 10, dadurch gekennzeichnet, daß die Basisschicht biaxial gestreckt und thermofixiert ist.

12. Ausweispapier nach einem der Ansprüche 1 bis 11, dadurch gekennzeichnet, daß zwischen der Basisschicht und der Deckschicht eine haftvermittelnde Schicht vorhanden ist.

13. Ausweispapier nach einem der Ansprüche 1 bis 12, dadurch gekennzeichnet, daß die Deckschicht coronabehandelt ist.

## Claims

1. Forgery-resistant identification document carrying a photograph and being provided with a protective film which covers the photograph, wherein the protective film comprises a base layer and a cover layer of a partially saponified olefin/vinyl ester copolymer.

2. An identification document as claimed in claim 1, wherein the cover layer comprises a partially saponified ethylene/vinyl ester copolymer.

3. An identification document as claimed in claim 2, wherein the cover layer comprises a partially saponified ethylene/vinyl acetate copolymer.

4. An identification document as claimed in any of claims 1 to 3, wherein the cover layer comprises a partially saponified ethylene/vinyl ester copolymer which has an olefin content of $\geqslant 30$ mole percent.

5. An identification document as claimed in any of claims 1 to 4, wherein the degree of saponification of the cover layer ranges between 20 and 99 percent.

6. An identification document as claimed in any of claims 1 to 5, wherein the cover layer comprises a mixture of the partially saponified polymer and polymers which are compatible therewith.

7. An identification document as claimed in claim 6, wherein the admixed polymers contain carbonyl groups.

8. An identification document as claimed in any of claims 1 to 7, wherein the cover layer carries a further layer in the form of a discontinuous pattern.

9. An identification document as claimed in any of claims 1 to 8, wherein the base layer is composed of polyvinyl chloride, polyester, polycarbonate, polyamide, cellulose acetobutyrate or cellulose acetate, if appropriate, in an oriented and heat-set state.

10. An identification document as claimed in claim 9, wherein the base layer comprises polyethylene terephthalate, if a polyester is used.

11. An identification document as claimed in claim 10, wherein the base layer is biaxially stretched and heat-set.

12. An identification document as claimed in any of claims 1 to 11, wherein an adhesion-promoting layer is present between the base layer and the cover layer.

13. An identification document as claimed in any of claims 1 to 12, wherein the cover layer is corona-treated.


## Revendications

1. Papier d'identité infalsifiable portant une photographie, qui présente une pellicule de couverture recouvrant la photographie, caractérisé en ce que la couche de couverture se compose d'une couche de base et d'une couche de recouvrement en copolymère oléfine-ester vinylique partiellement saponifié.

2. Papier d'identité selon la revendication 1, caractérisé en ce que la couche de recouvrement se compose d'un copolymère éthylène-ester vinylique partiellement saponifié.

3. Papier d'identité selon la revendication 2, caractérisé en ce que la couche de recouvrement se compose d'un copolymère éthylène-acétate de vinyle partiellement saponifié.

4. Papier d'identité selon l'une quelconque des revendications 1 à 3, caractérisé en ce que la couche de recouvrement se compose d'un copolymère éthylène-ester vinylique partiellement saponifié dont la teneur en oléfine est $\geqslant 30$ moles pour cent.

5. Papier d'identité selon l'une quelconque des revendications 1 à 4, caractérisé en ce que le degré de saponification de la couche de recouvrement est entre 20 et 99 %.

6. Papier d'identité selon l'une quelconque des revendications 1 à 5, caractérisé en ce que la couche de recouvrement se compose d'un mélange du polymère partiellement saponifié avec un polymère compatible avec celui-ci.

7. Papier d'identité selon la revendication 6, caractérisé en ce que les polymères incorporés sont des matières plastiques contenant des groupes carbonyle.

8. Papier d'identité selon l'une quelconque des revendications 1 à 7, caractérisé en ce que la couche de recouvrement porte une autre couche sous la forme d'un dessin interrompu.

9. Papier d'identité selon l'une quelconque des revendications 1 à 8, caractérisé en ce que la couche de base se compose de polychlorure de vinyle, de polyester, de polycarbonate, de polyamide, d'acétobutyrate de cellulose ou d'acétate de cellulose, le cas échéant sous forme orientée et thermofixée.

10. Papier d'identité selon la revendication 9, caractérisé en ce que dans le cas de l'utilisation d'un polyester, la couche de base se compose de polyéthylènetéréphtalate.

11. Papier d'identité selon la revendication 10, caractérisé en ce que la couche de base est étirée biaxialement et thermofixée.

12. Papier d'identité selon l'une quelconque des revendications 1 à 11, caractérisé en ce qu'une couche favorisant l'adhérence est présente entre la couche de base et la couche de recouvrement.

13. Papier d'identité selon l'une quelconque des revendications 1 à 12, caractérisé en ce que la couche de recouvrement est soumise à un traitement Corona.